# DEMANDE DE BREVET EUROPEEN

(11) **EP 0 612 872 A1**
(43) Date de publication de la demande: **31.08.1994**
(21) Numéro de dépôt: 94420068.2
(22) Date de dépôt: 23.02.1994
(51) Int. Cl.: D03C 1/14, B65G 45/10, F16H 7/04

(54) **Patin protège-poulie pour les systèmes de tirage associés aux cadres de lisses des machines à tisser**

(30) Priorité: 24.02.1993 FR 9302358
(71) Demandeur: S.A. DES ETABLISSEMENTS STAUBLI (France), F-74210 Faverges (FR)
(72) Inventeur: Pages, Jean-Pierre, F-74210 Faverges (FR)
(74) Mandataire: Monnier, Guy

(57) **Abrégé**

Le patin présente un profil général en forme de secteur qui sur son bord à profil concave comporte une saillie (14) apte à occuper la gorge (11) de la poulie (12) à protéger. Au niveau des segments latéraux, il est prévu d'une part une étrave terminale (13), d'autre part une rainure rectiligne (10) dont le fond vient tangenter la gorge (11) de façon à ce que le câble (2) renvoyé par la poulie (12) s'oppose lui-même à l'introduction de la bourre.

## Description

La présente invention a trait aux systèmes de tirage interposés entre les ratières et autres mécaniques pour la formation de la foule sur les machines à tisser et les cadres de lisses montés sur lesdites machines pour la commande des fils de chaîne en vue de l'insertion successive des fils de trame.

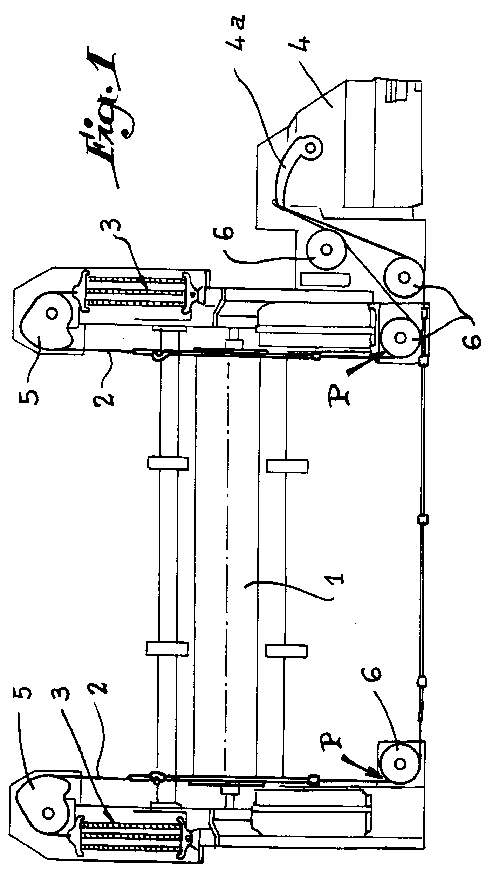

Ainsi qu'on l'a très schématiquement représenté à la fig. 1 du dessin annexé aux présentes, un tel système de tirage comprend ordinairement, au niveau de chacun des cadres de lisses 1 de la machine à tisser, deux câbles 2 dont les extrémités sont attachées l'une à un registre de ressorts 3 destiné au rappel élastique du cadre 1 envisagé, l'autre à l'un des leviers oscillants 4a de la mécanique 4. Entre ses deux extrémités, chaque câble 2 est renvoyé tout d'abord par un organe supérieur 5 en vue de définir un brin vertical apte à être rendu solidaire de l'un des montants du cadre 1, puis par une série de poulies 6 convenablement positionnées.

On sait par ailleurs que les systèmes de tirage du genre susvisé travaillent dans une atmosphère polluée par une bourre très volumineuse constituée par des déchets textiles arrachés aux fils de trame et aux fils de chaîne. Cette bourre vient se déposer sur les pièces constitutives du système de tirage, tout particulièrement sur les poulies inférieures 6. Par suite du mouvement oscillant de celles-ci, la bourre remplit la gorge de ces poulies en parvenant ainsi à provoquer le déraillement des câbles.

Pour éviter de tels incidents, on a proposé des capots de protection fixés au-dessus de chaque groupe de poulies afin de recueillir la bourre et éviter ainsi le dépôt de celle-ci sur lesdites poulies. Toutefois, un tel remède ne s'est pas révélé particulièrement efficace, la rotation alternative des poulies 6 favorisant l'introduction de la bourre à travers les perforations pratiquées dans le capot pour le passage du câble 2.

C'est à cet inconvénient qu'entend plus spécialement remédier la présente invention, laquelle a pour objet un patin agencé de manière à protéger efficacement les poulies des systèmes de tirage classiques.

Le patin suivant l'invention est défini à la revendication 1.

En fait le corps de ce patin, rigidement fixé sur la structure de la machine à tisser, présente un profil général en forme de secteur dont le bord concave à profil semi-circulaire comporte une saillie apte à occuper la gorge de la poulie à protéger. Les deux segments latéraux sont conformés pour présenter l'un une étrave terminale qui prolonge obliquement la saillie précitée, l'autre une rainure rectiligne qui embrasse à jeu réduit le câble envisagé et dont le fond vient à l'une de ses extrémités tangenter ladite gorge de façon à ce que le câble lui-même s'oppose à l'introduction de la bourre.

On observera ici que si le document US-A-2 363 353 (PARKER) cité montre bien un protecteur pour câble associé à une poulie pour éviter, entre autres buts, l'introduction de matières étrangères dans la gorge de celle-ci, la structure de ce dispositif diffère très nettement de celle qui fait l'objet de la présente invention par le fait que devant jouer le rôle de guide, il est monté oscillant sur le pourtour de la poulie et il ne comporte que deux bossages terminaux séparés engagés dans la gorge qui loge le câble. On ne trouve aucune étrave, ni de rainure rectiligne à fond tangent, de sorte que la protection assurée est bien inférieure. Une telle solution ne peut être adoptée dans le cas de la bourre textile.

Le dessin annexé, donné à titre d'exemple, permettra de mieux comprendre l'invention, les caractéristiques qu'elle présente et les avantages qu'elle est susceptible de procurer :
Comme on l'a indiqué plus haut, fig. 1 rappelle schématiquement la structure d'un système de tirage classique.
Fig. 2 est une vue en perspective montrant l'agencement d'un patin de protection suivant l'invention, spécialement établi pour équiper les poulies désignées par les flèches référencées P en fig. 1.
Fig. 3 est une vue de côté avec arrachement du patin suivant fig. 2.

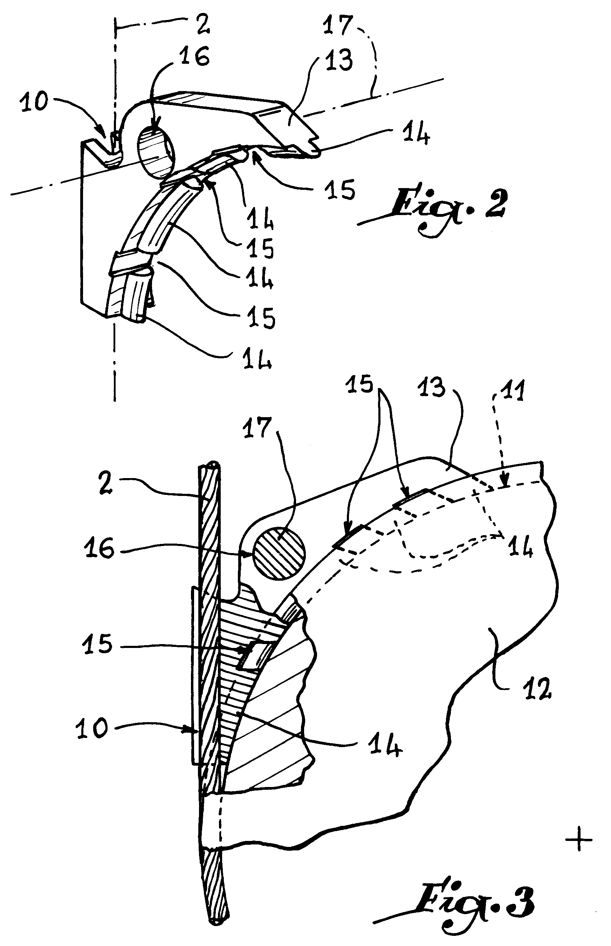

Le corps du patin représenté en fig. 2 et 3 est formé par une pièce monobloc qu'on supposera être obtenue par moulage d'une matière synthétique appropriée. Cette pièce présente la forme générale d'un secteur géométrique et l'on observera :
- que l'un des deux segments rectilignes est creusé d'une rainure rectiligne 10 dont le profil en section est similaire à la gorge 11 de la poulie 12 à équiper ;
- que l'extrémité libre du segment rectiligne opposé est profilée pour constituer une sorte d'étrave référencée 13 ;
- que le bord semi-circulaire à profil concave comporte une saillie 14 qui présente en section un profil tel qu'elle est apte à venir s'engager à jeu aussi réduit que possible dans la gorge 11 de la poulie 12 envisagée, laquelle saillie est interrompue pour déterminer des espaces vides ou logements 15, au nombre de trois dans l'exemple de réalisation considéré ;
- et que le sommet du patin est percé d'une perforation 16 pour le passage d'une barre 17 destinée à former support pour l'ensemble, la fixation de ce dernier sur ladite barre étant susceptible d'être assurée de toute manière appropriée, par exemple à l'aide de vis radiales (non représentées).

Cette barre 17 est positionnée sur la structure de la machine à tisser de façon à ce qu'une fois rendu solidaire de ladite barre, le patin se trouve disposé par rapport à la poulie 12 considérée de manière telle que la saillie 14 est engagée dans la gorge 11 de ladite poulie et que le fond de la rainure 10 vient intersecter tangentiellement ladite gorge.

Dans ces conditions et comme illustré en fig. 3, le câble 2 est appliqué contre le fond de la rainure 10 précitée avant de coopérer avec la gorge 11, en s'opposant à la pénétration de la bourre. De la même manière l'étrave 13, en liaison avec la saillie 14, évite que la bourre vienne s'introduire dans la gorge 11, le profil oblique de cette étrave tendant à chasser vers le haut la bourre qui se dépose. En outre, la bourre qui en dépit de la présence du patin s'engagerait dans la gorge précitée serait recueillie dans l'un des logements 15 formant ainsi espaces de décompression.

On conçoit que le patin suivant l'invention peut être aussi bien de type élémentaire en étant destiné à être associé à chacune des poulies du système de tirage, que de type collectif en étant agencé pour assurer la protection de l'ensemble des poulies montées sur le même axe-support. En outre, le corps de ce patin est susceptible d'être profilé pour être associé aux différentes poulies 6 du système de tirage.

## Revendications

1. Patin de protection pour les poulies de renvoi des câbles (52) des systèmes de tirage interposés entre les leviers oscillants des mécaniques de formation de la foule et les cadres de lisses montés sur une machine à tisser, caractérisé en ce que son corps, rigidement fixé sur la structure de la machine à tisser, présente un profil général en forme de secteur dont le bord concave à profil semi-circulaire comporte une saillie (14) apte à occuper la gorge (11) de la poulie (12) à protéger, tandis que les deux segments latéraux sont conformés pour présenter l'un une étrave terminale (13) qui prolonge obliquement la saillie (14) précitée, l'autre une rainure rectiligne (10) qui embrasse à jeu réduit le câble (2) envisagé et dont le fond vient tangenter ladite gorge (11) de façon à ce que le câble lui-même s'oppose à l'introduction de la bourre.

2. Patin suivant la revendication 1, caractérisé en ce que la saillie (14) est interrompue pour définir au moins un espace de décompression (15) apte à recueillir la bourre qui se serait introduite dans la gorge (11) en dépit de la présence du patin.

3. Patin suivant l'une quelconque des revendications 1 et 2, caractérisé en ce que son corps est perforé (en 16) pour le passage d'une barre de suspension (17).
